# EUROPEAN PATENT SPECIFICATION

(11) **EP 4 187 291 B1**
(45) Date of publication and mention of the grant of the patent: **14.10.2026**
(21) Application number: 21846811.4
(22) Date of filing: 22.07.2021
(51) Int. Cl.: G02B 5/30, G02F 1/1333, G02F 1/13363

(54) **OPTICAL MODULATION DEVICE AND AUTOMOBILE**
OPTISCHE MODULATIONSVORRICHTUNG UND AUTOMOBIL
DISPOSITIF DE MODULATION OPTIQUE ET AUTOMOBILE

(30) Priority: 24.07.2020 KR 20200092400
(43) Date of publication of application: 31.05.2023
(73) Proprietor: LG Chem, Ltd., Seoul 07336 (KR)
(72) Inventor: GIM, Min Jun, Daejeon 34122 (KR); OH, Dong Hyun, Daejeon 34122 (KR); YOU, Jung Sun, Daejeon 34122 (KR); KIM, Jin Hong, Daejeon 34122 (KR); KIM, Jung Woon, Daejeon 34122 (KR)
(74) Representative: Goddar, Heinz J.
(86) International application number: PCT/KR2021/009498
(87) International publication number: WO 2022/019683

(56) References cited:
- JP-A- 2004 538 529
- JP-A- 2007 065 316
- KR-A- 20190 113 646
- KR-A- 20200 051 269
- US-A1- 2018 321 553
- US-A1- 2019 235 301

## Description

### [Technical Field]

The present application relates to a light modulating device and an automobile. The light modulating device may be included in a sunroof or glass of an automobile.

### [Background Art]

Through a sunroof or glass mounted on an automobile, a large amount of sunlight enters the vehicle in a season with a high irradiance level of sunlight or in a region with a high irradiance level of sunlight such as a tropical area. Such sunlight causes the temperature increase of the vehicle, and the like.

Accordingly, there is a case where a means capable of blocking sunlight is physically installed on a sunroof or glass during a period with a high irradiance level of sunlight.

However, when the light modulating device as above is applied, there is a problem that non-uniformity of light transmittance occurs according to the viewing angle of a person riding in the vehicle, and accordingly there is a problem that non-uniformity such as a black band occurs depending on the observation direction.

US2019/0235301 A1 discloses an optical device which is capable of varying transmittance.

### [Disclosure]

### [Technical Problem]

The present application relates to a light modulating device and an automobile. Specifically, it is an object to provide, as a light modulating device used as a sunroof, or side glass of an automobile, or included in the sunroof, or side glass, or an automobile in which the light modulating device is included in the sunroof, or side glass, a light modulating device, which is applied to the automobile and designed to enable implementation of uniform transmittance regardless of automobile passengers' visual fields, and an automobile comprising the same.

### [Technical Solution]

The present invention is defined by the claims. **In** this specification, the term such as vertical, horizontal, orthogonal or parallel among terms defining an angle means substantially vertical, horizontal, orthogonal or parallel in the range without impairing intended effects, and the range of vertical, horizontal, orthogonal or parallel includes an error such as a production error or a deviation (variation). For example, each case of the foregoing may include an error within about ±15 degrees, or an error within about ±14 degrees, an error within about ±13 degrees, an error within about ±12 degrees, an error within about ± 11 degrees, an error within about ±10 degrees, an error within about ±9 degrees, an error within about ±8 degrees, an error within about ±7 degrees, an error within about ±6 degrees, an error within about ±5 degrees, an error within about ±4 degrees, an error within about ±3 degrees, an error within about ±2 degrees, an error within about ±1 degree, or an error within about ±0.5 degrees.

Among physical properties mentioned herein, when the measured temperature affects relevant physical properties, the physical properties are physical properties measured at room temperature, unless otherwise specified.

In this specification, the term room temperature is a temperature in a state without particularly warming or cooling, which may mean one temperature in a range of about 10°C to 30°C, for example, a temperature of about 15°C or higher, 18°C or higher, 20°C or higher, or about 23°C or higher, and about 27°C or lower. Unless otherwise specified, the unit of the temperature mentioned herein is °C.

The phase difference and the refractive index mentioned herein mean a refractive index for light having a wavelength of about 550 nm, unless otherwise specified.

Unless otherwise specified, the angle formed by any two directions, which is mentioned herein, may be an acute angle of acute angles to obtuse angles formed by the two directions, or may be a small angle from angles measured in clockwise and counterclockwise directions. Thus, unless otherwise specified, the angles mentioned herein are positive. However, in order to display the measurement direction between the angles measured in the clockwise direction or the counterclockwise direction if necessary, any one of the angle measured in the clockwise direction and the angle measured in the counterclockwise direction may be represented as a positive number, and the other angle may be represented as a negative number.

The present application relates to a light modulating device applied to a sunroof or glass of an automobile, or included in the sunroof or glass. The present application also relates to an automobile comprising the light modulating device in the sunroof or glass.

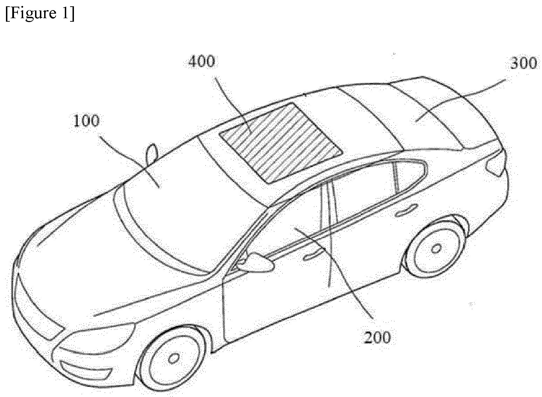

Here, as shown in Figure 1, the glass isthe side glass (200) of the vehicle. (100) is the front glass and (300) is the rear glass of the vehicle. The sunroof or glass may be entirely composed of the light modulating device, or at least a part thereof may be composed of the light modulating device.

In this specification, the term light modulating device may mean a device capable of switching between at least two or more different light states. Here, the different light states may mean states in which at least transmittance, color, and/or haze are different.

An example of the state that the light modulating device can implement includes a transparent, black, high reflection, low-reflection and/or color mode state indicating a specific color and the like, but is not limited thereto.

In one example, the light modulating device may be a device capable of switching between at least the transparent and black mode states, or a device capable of switching between the high reflection and low reflection mode states.

The transmittance of the light modulating device in the transparent mode may be at least 20% or more, 25% or more, 30% or more, 35% or more, 40% or more, 45% or more, 50% or more, 55% or more, 60% or more, 65% or more, 70% or more, 75% or more, or 80% or more or so.

The transmittance of the light modulating device in the black mode state may be 60% or less, 55% or less, 50% or less, 45% or less, 40% or less, 35% or less, 30% or less, 25% or less, 20% or less, 15% or less, 10% or less, 5% or less, 1% or less or 0.5% or less. Since the higher the transmittance in the transparent mode state is, the more advantageous it is and the lower the transmittance in the black mode state is, the more advantageous it is, the upper limit of the transmittance in the transparent mode state and the lower limit of the transmittance in the black mode state are not particularly limited, where in one example, the upper limit of the transmittance in the transparent mode state may be about 100% and the lower limit of the transmittance in the black mode state may be about 0%.

In one example, in the light modulating device capable of switching between the transparent mode state and the black mode state, the difference between the transmittance in the transparent mode state and the transmittance in the black mode state (transparent mode - black mode) may be 15% or more, 20% or more, 25% or more, 30% or more, 35% or more, or 40% or more, or may be 90% or less, 85% or less, 80% or less, 75% or less, 70% or less, 65% or less, 60% or less, 55% or less, 50% or less, or 45% or less.

The transmittance may be linear light transmittance. The linear light transmittance is a percentage of the ratio of the light transmitted in the same direction as the incident direction to the light incident on the device. For example, if the device is in the form of a film or sheet, the percentage of the light transmitted through the device in the direction parallel to the normal direction among incident light in a direction parallel to the normal direction of the film or sheet surface may be defined as the transmittance.

The transmittance may be each transmittance for any one wavelength in the visible light region, for example, any one wavelength in a range of about 400 to 700 nm or about 380 to 780 nm, or transmittance for the entire visible light region, maximum or minimum transmittance among the transmittance for the entire visible light region, or an average value of the transmittance in the visible region.

The light modulating device of the present application may be designed to switch between at least two or more states of any one state selected from the transparent mode, black mode and color mode states, and another state. If necessary, other third different states or higher states rather than the above states may also be implemented.

The switching of the light modulating device may be controlled depending on whether or not an external signal, for example, a voltage signal is applied. For example, in a state of not applying an external signal such as a voltage, the light modulating device may maintain any one of the above-described states, and then may be switched to another state when a voltage is applied. The state of the mode may be changed or the third different mode state may also be implemented, by changing the intensity, frequency and/or shape of the applied voltage.

Therefore, the automobile of the present application may further comprise a control circuit capable of switching the light modulating device or an external signal applying means, and the like. A method of configuring such additional means is not particularly limited, and known means may be appropriately applied.

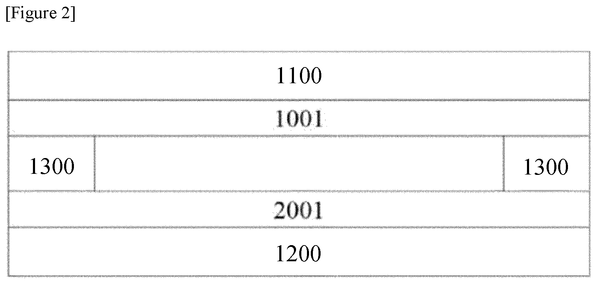

The light modulating device of the present application may comprise, as a basic unit, a light modulation film layer having two substrates disposed opposite to each other and a light modulation layer positioned between the substrates. Figure 2 is a diagram showing one example of the light modulation film layer. As shown in the drawing, the light modulation film layer may comprise a first substrate (1100) and a second substrate (1200) which are oppositely disposed. Typically, the first substrate (1100) and the second substrate (1200) are attached by a sealant (1300).

A functional layer (1001) is formed on one surface (hereinafter, may be referred to as a first surface) of the first substrate (1100), a liquid crystal alignment film (2001) is formed on one surface (hereinafter, may be referred to as a first surface) of the other second substrate (1200), and a light modulation layer is positioned between the first substrate (1100) and the second substrate (1200) disposed opposite to each other. The light modulation layer is a liquid crystal layer, the liquid crystal alignment film is typically formed on both surfaces of the first and second substrates (1100, 1200). Therefore, the functional layer (1001) formed on the first surface of the first substrate (1100) may also be the liquid crystal alignment film. In addition, although not shown in the drawing, in any one of the first and second substrates of the light modulation film layer, a spacer for maintaining an interval (cell gap) between the first and second substrates may be present.

In this specification, the first surface of the substrate means any one surface of the main surface of the substrate and the opposite surface, and the second surface means the other surface of the main surface of the substrate and the opposite surface.

As the substrate, the anisotropic substrate means a substrate whose refractive index varies depending on the polarization state of light. As the substrate, an inorganic substrate such as a glass substrate, a crystalline or amorphous silicon substrate or a quartz substrate, or a plastic substrate may be used. As the plastic substrate, a TAC (triacetyl cellulose) substrate; a COP (cycloolefin copolymer) substrate such as a norbornene derivative substrate; a PMMA (poly(methyl methacrylate)) substrate; a PC (polycarbonate) substrate; a PE (polyethylene) substrate; a PP (polypropylene) substrate; a PVA (polyvinyl alcohol) substrate; a DAC (diacetyl cellulose) substrate; a Pac (polyacrylate) substrate; a PES (poly ether sulfone) substrate; a PEEK (polyetheretherketon) substrate; a PPS (polyphenylsulfone), a PEI (polyetherimide) substrate; a PEN (polyethylenenaphthatlate) substrate; a polyester substrate such as a PET (polyethyleneterephtalate) substrate; a PI (polyimide) substrate; a PSF (polysulfone) substrate; a PAR (polyarylate) substrate or a substrate comprising an amorphous fluororesin or the like may be used, without being limited thereto. The thickness of such a substrate is not particularly limited, which may be selected within an appropriate range.

In the present application, an anisotropic substrate may be applied in terms of securing mechanical properties, flexibility, and optical properties suitable for vehicles, and specifically, an anisotropic plastic substrate may be applied. Such a substrate can provide mechanical properties, flexibility, and optical properties suitable for a light modulating device for a vehicle due to its inherent properties.

Among the anisotropic plastic substrates, a substrate having optical anisotropy in a certain level or more may exhibit mechanical properties and flexibility particularly suitable for vehicles. For example, in the present application, as the substrate, a plastic substrate having an in-plane phase difference of at least 400 nm or more may be applied.

In this specification, the in-plane phase difference (Rin) means a value calculated by Equation 1 below. [Equation 1] $Rin = d \times \left(nx-ny\right)$

In Equation 1, Rin is the in-plane phase difference, d is the thickness of the substrate, nx is the refractive index of the substrate in the slow axis direction, ny is the refractive index of the substrate in the fast axis direction, which is the refractive index in the in-plane direction orthogonal to the slow axis direction.

In another example, the in-plane phase difference may be 400 nm or more, 450 nm or more, 550 nm or more, 600 nm or more, 650 nm or more, 700 nm or more, 750 nm or more, 800 nm or more, 850 nm or more, 900 nm or more, 950 nm or more, 1000 nm or more, 2000 nm or more, 3000 nm or more, 4,000 nm or more, 5,000 nm or more, 6,000 nm or more, 7,000 nm or more, 8,000 nm or more, 9,000 nm or more, 10,000 nm or more, 11,000 nm or more, 12,000 nm or more, 13,000 nm or more, 14,000 nm or more, or 15,000 nm or more or so. In addition, the in-plane phase difference of each of the substrates may be about 50,000 nm or less, about 40,000 nm or less, about 30,000 nm or less, 20,000 nm or less, 18,000 nm or less, 16,000 nm or less, 15,000 nm or less, or 12,000 nm or less or so.

As the plastic substrate having the phase difference, a polyester film substrate such as a PET (poly(ethylene terephthalate)) substrate is typically known, but the type of substrate that can be applied in the present application is not limited thereto, and all the various type substrates can be applied as long as they have such an in-plane phase difference. In addition, at least two substrates applied to the light modulation film layer may all have such an in-plane phase difference, but at least one substrate may have such an in-plane phase difference.

The substrate having this anisotropy exhibits mechanical properties, flexibility, and optical properties suitable for vehicles, but due to the inherent optical anisotropy of the relevant substrate, when applied to a vehicle, it can provide optical non-uniformity depending on passengers' visual fields. However, the light modulating device designed according to the present application can improve or eliminate disadvantages while taking advantages of the substrate.

For example, when the light modulating device is applied to a sunroof of an automobile or included in the sunroof, the slow axis of the first and/or second anisotropic substrate may be formed to be parallel to the width direction of the automobile. At this time, the fact that the slow axis is formed to be parallel to the width direction of the automobile may mean that, for example, in the case where a fastening means or a fastening portion that can be mounted at a sunroof position of the automobile is present in the light modulating device, when the light modulating device is mounted at the sunroof position using the fastening means or fastening portion, the fastening means or the fastening portion is present so that the slow axis of the substrate is disposed to be parallel to the width direction of the automobile. In another example, it may mean that if the shape of the light modulating device is configured to have the same shape as the shape of the sunroof of the automobile and the light modulating device is mounted on the sunroof of the automobile according to the shape, the shape of the light modulating device is manufactured so that the slow axis of the substrate is disposed parallel to the width direction of the automobile.

Therefore, in one example, a fastening means or a fastening portion that can be mounted to the sunroof of the automobile is present in the light modulating device or the light modulating device has the same shape as the sunroof, and the fastening means, fastening portion or shape may be determined so that when the light modulating device is mounted on the sunroof of the automobile according to the fastening means, fastening portion or shape, the slow axis of the first or second anisotropic substrate is disposed parallel to the width direction of the automobile.

A method of forming the fastening means or fastening portion as above on the light modulating device or configuring the light modulating device to have the above shape is not particularly limited, and a known method may be applied.

For example, when the light modulating device is applied to side glass of an automobile, or included in the side glass, the slow axis of the first and/or second anisotropic substrate may be formed to be disposed parallel to the longitudinal direction of the automobile. At this time, the fact that the slow axis is formed to be disposed parallel to the longitudinal direction of the automobile may mean that, for example, in the case where a fastening means or a fastening portion that can be mounted at a position on the side glass of the automobile is present in the light modulating device, when the light modulating device is mounted at the side glass position using the fastening means or fastening portion, the fastening means or the fastening portion is present so that the slow axis of the substrate is disposed parallel to the longitudinal direction of the automobile. **In** another example, it may mean that if the shape of the light modulating device is configured to have the same shape as the shape of the side glass of the automobile and the light modulating device is mounted as the or side glass of the automobile according to the shape, the shape of the light modulating device is manufactured so that the slow axis of the substrate is disposed parallel to the longitudinal direction of the automobile.

Therefore, in one example, a fastening means or a fastening portion that can be mounted on the side glass of the automobile is present in the light modulating device or the light modulating device has the same shape as the side glass, the fastening means, fastening portion or shape may be determined so that when the light modulating device is mounted on the or side glass of the vehicle according to the fastening means, fastening portion or shape, the slow axis of the first or second anisotropic substrate is disposed parallel to the longitudinal direction of the automobile.

A method of forming the fastening means or fastening portion as above on the light modulating device or configuring the light modulating device to have the above shape is not particularly limited, and a known method may be applied.

For example, when both anisotropic substrates are applied as two substrates (e.g., the first and second substrates (1100, 1200) in Figure 2) in the light modulation film layer of the present application, the two substrates (the first and second substrates) are suitably arranged so that their optical axes are parallel to each other. **In** this specification, the optical axis of the anisotropic substrate means the slow axis of the anisotropic substrate, unless otherwise specified, and the optical axis of the polarization layer means the absorption axis of the polarization layer, unless otherwise specified. The absorption axis of the polarization laye r and the slow axis of the first or second anisotropic substrate are perpendicular or h orizontal to each other.

**In** the light modulation film layer, the light modulation layer present between the substrates is a functional layer capable of changing light transmittance, reflectivity, haze and/or color, etc. of the light modulating device, alone or in connection with other components, depending on whether or not an external signal is applied. Such a light modulation layer may be referred to as an active light modulation layer herein.

**In** this specification, the external signal may mean an external factor, for example, an external voltage or the like, which may affect the behavior of a material included in the light modulation layer, for example, a light modulation material. Therefore, a state without any external signal may mean a state without the application of an external voltage or the like.

**In** the present application, the light modulation layer is a liquid crystal layer.

**In** one example, the liquid crystal layer may be applied as the light modulation layer. The liquid crystal layer is a layer containing a liquid crystal compound. **In** this specification, the range of the term liquid crystal layer includes all layers containing a liquid crystal compound, and for example, as described below, a so-called guest host layer comprising a liquid crystal compound (liquid crystal host) and a dichroic dye, or a layer comprising other additives such as a chiral dopant together with a liquid crystal compound is also a kind of liquid crystal layer defined in this specification. The liquid crystal layer may be an active liquid crystal layer, and thus the liquid crystal compound may exist in the liquid crystal layer such that the orientation direction changes depending on whether or not an external signal is applied. As the liquid crystal compound, any kind of liquid crystal compound can be used as far as the orientation direction can be changed by application of an external signal. For example, a

smectic liquid crystal compound, a nematic liquid crystal compound or a cholesteric liquid crystal compound can be used as the liquid crystal compound. Furthermore, the liquid crystal compound may be, for example, a compound which has no polymerizable group or crosslinkable group so that the orientation direction can be changed by application of an external signal.

The liquid crystal layer may comprise a liquid crystal compound whose dielectric constant anisotropy is positive or negative. The absolute value of the dielectric constant anisotropy of the liquid crystal can be appropriately selected in consideration of the object of the present application. The term dielectric constant anisotropy (Δε) may mean a difference (ε// - ε⊥) between the horizontal dielectric permittivity (ε//) and the vertical permittivity (ε⊥) of the liquid crystal. In this specification, the term horizontal permittivity (ε//) means a dielectric constant value measured along the direction of an electric field in a state where a voltage is applied so that the director of the liquid crystal and the direction of the electric field by the applied voltage are substantially horizontal, and the vertical permittivity (ε 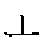 ) means a dielectric constant value measured along the direction of an electric field in a state where a voltage is applied so that the director of the liquid crystal and the direction of the electric field by the applied voltage are substantially perpendicular.

The driving mode of the liquid crystal layer may be exemplified by, for example, a DS (dynamic scattering) mode, an ECB (electrically controllable birefringence) mode, an IPS (in-plane switching) mode, an FFS (fringe-field switching) mode, an OCB (optically compensated bend) mode, a VA (vertical alignment) mode, an MVA (multi-domain vertical alignment) mode, a PVA (patterned vertical alignment) mode, an HAN (hybrid aligned nematic) mode, a TN (twisted nematic) mode, an STN (super twisted nematic) mode or R-TN (reversed twisted nematic) mode, and the like.

The light modulation layer, which is a liquid crystal layer, may further comprise a dichroic dye in terms of controlling light transmittance-variable characteristics together with the liquid crystal compound, if necessary. For example, when the light modulating device comprises one layered polarization layer, the light modulation layer, which is the liquid crystal layer, may further comprise the dichroic dye. In this specification, the term "dye" may mean a material capable of intensively absorbing and/or deforming light in at least a part or all of the ranges within a visible light region, for example, within a wavelength range of 400 nm to 700 nm, and the term "dichroic dye" may mean a material capable of anisotropic absorption of light in at least a part or all of the ranges of the visible light region. Such a dye is known, for example, as an azo dye or an anthraquinone dye, and the like, but is not limited thereto.

In one example, for example, when the light modulating device comprises one layered polarization layer, the light modulation layer is a liquid crystal layer comprising a liquid crystal compound and a dichroic dye, which may be a so-called guest host liquid crystal layer (guest host liquid crystal cell). The term "GHLC layer" may mean a functional layer that dichroic dyes are arranged together depending on arrangement of liquid crystals to exhibit anisotropic light absorption characteristics with respect to an alignment direction of the dichroic dyes and the direction perpendicular to the alignment direction, respectively. For example, the dichroic dye is a substance whose absorption rate of light varies with a polarization direction, where if the absorption rate of light polarized in the long axis direction is large, it may be referred to as a p-type dye, and if the absorption rate of polarized light in the short axis direction is large, it may be referred to as an n-type dye. In one example, when a p-type dye is used, the polarized light vibrating in the long axis direction of the dye may be absorbed and the polarized light vibrating in the short axis direction of the dye may be less absorbed to be transmitted. Hereinafter, unless otherwise specified, the dichroic dye is assumed to be a p-type dye.

The light modulation film layer comprising the guest host liquid crystal layer as the light modulation layer may function as an active polarization layer (active polarizer). In this specification, the term "active polarization layer (active polarizer)" may mean a functional element capable of controlling anisotropic light absorption depending on external signal application. Such an active polarization layer can be distinguished from a passive polarization layer, which is described below, having constant light absorption or light reflection characteristics regardless of the external signal application. The guest host liquid crystal layer can control the anisotropic light absorption for the polarized light in the direction parallel to the arrangement direction of dichroic dyes and the polarized light in the vertical direction by controlling the arrangement of liquid crystals and dichroic dyes. Since the arrangement of liquid crystals and dichroic dyes can be controlled by the application of the external signal such as a magnetic field or an electric field, the guest host liquid crystal layer can control anisotropic light absorption depending on the external signal application.

The liquid crystal layer, which is a light modulation layer, may also comprise a so-called chiral dopant together with the liquid crystal compound. Such a chiral dopant may induce orientation of a helical structure in the liquid crystal compound.

The chiral dopant may be used without any particular limitation, as long as it can induce a desired twisting without impairing liquid crystallinity such as nematic regularity. The chiral dopant for inducing rotation in the liquid crystal molecules needs to include at least chirality in the molecular structure. The chiral dopant may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral dopant may be, for example, a low molecular weight compound having a molecular weight of 1,500 or less. As the chiral dopant, commercially available chiral nematic liquid crystals, and the like may be applied.

Also, the ratio of the chiral dopant is not particularly limited, but the chiral dopant may be included in a ratio that the ratio (d/p) of the thickness (d, cell gap) of the light modulation layer and the pitch (p) of the helical structure of the liquid crystal compound generated by the addition of the chiral dopant may be 0.05 or more, 0.1 or more, 0.15 or more, 0.2 or more, 0.25 or more, 0.3 or more, 0.35 or more, 0.4 or more or so, 0.45 or more or so, 0.5 or more or so, 0.55 or more or so, 0.6 or more or so, 0.65 or more or so, 0.7 or more or so, 0.75 or more or so, or 0.8 or more or so. Such a ratio (d/p) is linked to the orientation of the liquid crystal compound induced by the pressure-sensitive adhesive layer or adhesive layer and the liquid crystal alignment film, so that an orientation state suitable for the applied use can be derived. In addition, as the ratio (d/p) is higher, the light modulating device can more efficiently implement transparent and black states, and in particular, a device in which transmittance is effectively suppressed in the black state can be implemented. However, if an excessive amount of a chiral dopant is added to increase the ratio (d/p), there is a problem that orientation stability, particularly orientation stability according to temperature change, or orientation stability at high temperature is lowered. However, when two chiral dopants are applied according to the present application, as described below, excellent orientation stability can be ensured even in a state where the ratio (d/p) is maintained high. In another example, the ratio (d/p) may be 2 or less, 1.5 or less, 1 or less, less than 1, 0.95 or less, 0.9 or less, or 0.85 or less.

The pitch (p) of the light modulation layer (liquid crystal layer) in the so-called twisted or cholesteric orientation mode to which the chiral dopant is applied can be measured by a measurement method using a wedge cell, and can be measured by a method described in D. Podolskyy et al. Simple method for accurate measurements of the cholesteric pitch using a stripe-wedge Grandjean-Cano cell (Liquid Crystals, Vol. 35, No. 7, July 8\2008, 789-791). In addition, the content (weight%) of the chiral dopant is calculated by the equation of 100/(HTP (helical twisting power) X pitch (nm)), which may be selected at an appropriate ratio in consideration of the desired pitch (p).

The type of the above additional components (e.g., dichroic dye or chiral dopant, etc.) included in the light modulation layer together with the liquid crystal compound is not particularly limited, where known components may be used and the light modulation layer may further comprise required known components in addition to the above components.

The type of liquid crystal alignment film that can be formed on the first surface of the first and/or second substrate in the light modulation film layer is not particularly limited. As the liquid crystal alignment film, a known vertical or horizontal alignment film or other alignment films may be applied in consideration of desired initial orientation. As for the type of the alignment film, a contact alignment film such as a rubbing alignment film or a noncontact alignment film such as a photo alignment film may be applied.

The type of the pressure-sensitive adhesive layer or the adhesive layer that can be applied as a functional layer to the surface of the first substrate is not particularly limited. For example, it has been confirmed that various types of pressure-sensitive adhesives or adhesives known as a so-called OCA (optically clear adhesive) or OCR (optically clear resin) in the industry may induce suitable orientation of the liquid crystal compound in combination with the liquid crystal alignment film. As the pressure-sensitive adhesive or adhesive, for example, an acrylic, silicone-based, epoxy-based, or urethane-based pressure-sensitive adhesive or adhesive may be applied.

As the suitable pressure-sensitive adhesive or adhesive, a silicone-based pressure-sensitive adhesive or adhesive may be exemplified. The specific surface characteristics of the silicone-based pressure-sensitive adhesive or adhesive may induce the orientation state of the liquid crystal compound suitable for the purpose in combination with the liquid crystal alignment film (especially, vertical alignment film).

As the silicone-based pressure-sensitive adhesive or adhesive, a cured product of a curable silicone adhesive or pressure-sensitive adhesive composition (hereinafter, may be simply referred to as a curable silicone composition) may be used. The type of curable silicone composition is not particularly limited, and for example, a heat-curable silicone composition or an ultraviolet-curable silicone composition may be used.

**In** one example, the curable silicone composition is an addition-curable silicone composition, which may comprise (1) an organopolysiloxane containing two or more alkenyl groups in the molecule, and (2) an organopolysiloxane containing two or more silicon-bonded hydrogen atoms in the molecule. Such a silicone compound may form a cured product by an addition reaction, for example, in the presence of a catalyst such as a platinum catalyst.

The (1) organopolysiloxane comprises, as a main component constituting the silicone cured product, at least two alkenyl groups in one molecule. At this time, a specific example of the alkenyl group includes a vinyl group, an allyl group, a butenyl group, a pentenyl group, a hexenyl group or a heptenyl group, and the like, and a vinyl group of the foregoing is usually applied, but is not limited thereto. In the (1) organopolysiloxane, the bonding position of the alkenyl group as described above is not particularly limited. For example, the alkenyl group may be bonded to the end of the molecular chain and/or to the side chain of the molecular chain. In addition, in the (1) organopolysiloxane, the type of the substituent that may be included in addition to the above-described alkenyl may include an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group or a 3,3,3-trifluoropropyl group, and the like, and a methyl group or a phenyl group of the foregoing is usually applied, but is not limited thereto.

The molecular structure of the (1) organopolysiloxane is not particularly limited, which may also have any shape, such as linear, branched, cyclic, reticulated or linear with partially branched. One having a linear molecular structure among such molecular structures is usually applied, but is not limited thereto.

A more specific example of the (1) organopolysiloxane may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, an organopolysiloxane copolymer comprising a siloxane unit represented by R¹₂SiO_{2/2} and a siloxane unit represented by R¹₂R²SiO_{1/2} and a siloxane unit represented by SiO_{4/2}, an organopolysiloxane copolymer comprising a siloxane unit represented by R¹₂R²SiO_{1/2} and a siloxane unit represented by SiO_{4/2}, an organopolysiloxane copolymer comprising a siloxane unit represented by R¹R²SiO_{2/2} and a siloxane unit represented by R¹SiO_{3/2} or a siloxane unit represented by R²SiO_{3/2}, and a mixture of two or more of the foregoing, but is not limited thereto. Here, R¹ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like. In addition, here, R² is an alkenyl group, which may be, specifically, a vinyl group, an allyl group, a butenyl group, a pentenyl group, a hexenyl group or a heptenyl group, and the like.

In the addition-curable silicone composition, the (2) organopolysiloxane may serve to crosslink the (1) organopolysiloxane. In the (2) organopolysiloxane, the bonding position of the hydrogen atom is not particularly limited, which may be, for example, bonded to the end and/or side chain of the molecular chain. Also, in the (2) organopolysiloxane, the kind of substituents that may be included in addition to the silicon-bonded hydrogen atom is not particularly limited, which may include, for example, an alkyl group, an aryl group, an aralkyl group or a halogen-substituted alkyl group, and the like as mentioned in the (1) organopolysiloxane, and among these, a methyl group or a phenyl group is usually applied, but is not limited thereto.

The molecular structure of the (2) organopolysiloxane is not particularly limited, and may also have any shape, such as linear, branched, cyclic, reticulated, or linear with partially branched. One having a linear molecular structure among such molecular structures is usually applied, but is not limited thereto.

A more specific example of the (2) organopolysiloxane may include a methylhydrogenpolysiloxane blocking with trimethylsiloxane groups at both ends of the molecular chain, a dimethylsiloxane-methylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, an organopolysiloxane copolymer comprising a siloxane unit represented by R¹₃SiO_{1/2}, a siloxane unit represented by R¹₂HSiO_{1/2} and a siloxane unit represented by SiO_{4/2}, an organopolysiloxane copolymer comprising a siloxane unit represented by R¹₂HSiO_{1/2} and a siloxane unit represented by SiO_{4/2}, an organopolysiloxane copolymer comprising a siloxane unit represented by R¹HSiO_{2/2} and a siloxane unit represented by R¹SiO_{3/2} or a siloxane unit represented by HSiO_{3/2} and a mixture of two or more of the foregoing, but is not limited thereto. Here, R¹ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group or a 3,3,3-trifluoropropyl group, and the like.

The content of the (2) organopolysiloxane is not particularly limited as long as it is included to the extent that appropriate curing can be performed. For example, the (2) organopolysiloxane may be contained in an amount of 0.5 to 10 silicon-bonded hydrogen atoms per one alkenyl group contained in the (1) organopolysiloxane as described above. In such a range, curing can be sufficiently performed and heat resistance can be secured.

The addition-curable silicone composition may further comprise platinum or a platinum compound as a catalyst for curing. The specific type of this platinum or platinum compound is not particularly limited. The ratio of the catalyst may also be adjusted to a level that proper curing may be performed.

In addition, the addition-curable silicone composition may also comprise an appropriate additive required from the viewpoint of improving storage stability, handling properties and workability in an appropriate ratio.

In another example, the silicone composition may comprise, as a condensation-curable silicone composition, for example, (a) an alkoxy group-containing siloxane polymer; and (b) a hydroxyl group-containing siloxane polymer.

The (a) siloxane polymer may be, for example, a compound represented by Formula 1 below.

[Formula 1] R¹ₐR²_{b}SiO_{c}(OR³)_{d}

In Formula 1, R¹ and R² each independently represent a hydrogen atom or a substituted or unsubstituted monovalent hydrocarbon group, R³ represents an alkyl group, where when a plurality of R¹, R² and R³ are present, they each may be the same or different from each other, and a and b each independently represent a number of 0 or more and less than 1, a+b represents a number of more than 0 and less than 2, c represents a number of more than 0 and less than 2, d represents a number of more than 0 and less than 4, and a+b+cX2+d is 4.

In the definition of Formula 1, the monovalent hydrocarbon group may be, for example, an alkyl group having 1 to 8 carbon atoms, a phenyl group, a benzyl group or a tolyl group, and the like, where the alkyl group having 1 to 8 carbon atoms may be a methyl group, an ethyl group, a propyl group, an isopropyl group, a butyl group, a pentyl group, a hexyl group, a heptyl group or an octyl group, and the like. Also, in the definition of Formula 1, the monovalent hydrocarbon group may be substituted with a known substituent such as a halogen, an amino group, a mercapto group, an isocyanate group, a glycidyl group, a glycidoxy group or a ureido group.

In the definition of Formula 1, an example of the alkyl group of R³ may include a methyl group, an ethyl group, a propyl group, an isopropyl group or a butyl group, and the like. Among these alkyl groups, a methyl group or an ethyl group, and the like is usually applied, but is not limited thereto.

Among the polymers of Formula 1, a branched or tertiary crosslinked siloxane polymer may be used. Furthermore, in this (a) siloxane polymer, a hydroxyl group may remain within a range that does not impair the object, specifically within a range that does not inhibit the dealcoholization reaction.

The (a) siloxane polymer may be produced, for example, by hydrolyzing and condensing a polyfunctional alkoxysilane or a polyfunctional chlorosilane, and the like. An average technician in this field can easily select an appropriate polyfunctional alkoxysilane or chlorosilane depending on the desired (a) siloxane polymer, and can also easily control the conditions of the hydrolysis and condensation reactions using the same. Meanwhile, in the production of the (a) siloxane polymer, an appropriate monofunctional alkoxy silane may also be used in combination depending on the purpose.

As the (a) siloxane polymer, for example, a commercially available organosiloxane polymer such as Shin-Etsu Silicone's X40-9220 or X40-9225, or GE Toray Silicone's XR31-B1410, XR31-B0270 or XR31-B2733 may be used.

As the (b) hydroxyl group-containing siloxane polymer contained in the condensation-curable silicone composition, for example, a compound represented by the following formula 2 may be used.

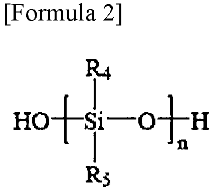

In Formula 2, R₄ and R₅ each independently represent a hydrogen atom or a substituted or unsubstituted monovalent hydrocarbon group, where when a plurality of R₄ and R₅ are present, they may be the same or different from each other, and n represents an integer of 5 to 2,000.

In the definition of Formula 2, the specific type of the monovalent hydrocarbon group may include, for example, the same hydrocarbon group as the case of Formula 1 above.

The (b) siloxane polymer may be produced, for example, by hydrolyzing and condensing dialkoxysilane and/or dichlorosilane, and the like. An average technician in this field can easily select an appropriate dialkoxysilane or dichlorosilane according to the desired (b) siloxane polymer, and can also easily control the conditions of the hydrolysis and condensation reactions using the same. As the (b) siloxane polymer as above, a commercially available bifunctional organosiloxane polymer, such as GE Toray Silicone's XC96-723, YF-3800 or YF-3804, and the like may be used.

The above-described addition-curing or condensation-curing silicone composition is an example of a material for forming the silicone pressure-sensitive adhesive or adhesive applied in the present application. That is, basically, all silicone pressure-sensitive adhesives or adhesives known as OCA or OCR, and the like in the industry can be applied in the present application.

The type of the pressure-sensitive adhesive or adhesive or the curable composition forming the same is not particularly limited, which may be appropriately selected according to the intended use. For example, a solid, semi-solid or liquid pressure-sensitive adhesive or adhesive or curable composition may be used. The solid or semi-solid pressure-sensitive adhesive or adhesive or curable composition may be cured before the adhesion object is bonded. The liquid pressure-sensitive adhesive or adhesive or curable composition is referred to as a so-called optical clear resin (OCR), which may be cured after the adhesion object is bonded. According to one example, as the pressure-sensitive adhesive or adhesive or curable composition, a so-called polydimethyl siloxane-based pressure-sensitive adhesive or adhesive or curable composition or polymethylvinyl siloxane-based pressure-sensitive adhesive or adhesive or curable composition or alkoxysilicone-based pressure-sensitive adhesive or adhesive or curable composition may be used, without being limited thereto.

The thickness of the pressure-sensitive adhesive layer or adhesive layer is not particularly limited, which may be selected in an appropriate range for securing a desired adhesion or cohesion. The thickness may be in the range of approximately 1µm to 50µm. In another example, the thickness may be 2µm or more, 3µm or more, 4µm or more, 5µm or more, 6µm or more, 7µm or more, 8µm or more, 9µm or more, or 10µm or more, or may also be 45µm or less, 40µm or less, 35µm or less, 30µm or less, 25µm or less, 20µm or less, 15µm or less, or 10µm or less or so.

The initial orientation of the liquid crystal compound formed by the pressure-sensitive adhesive layer or adhesive layer and/or the liquid crystal alignment film in the liquid crystal layer, which is a light modulation layer, may be vertical orientation, horizontal orientation, oblique orientation or spray orientation. Also, in the vertical orientation, horizontal orientation, oblique orientation or spray orientation state, the liquid crystal compound may or may not be twisted to exist in twisting orientation or cholesteric orientation. Here, the initial orientation means orientation in a state where an external signal such as a voltage is not applied to the light modulation layer comprising the liquid crystal compound.

The meaning of the horizontal orientation, oblique orientation, vertical orientation or spray orientation is as known in the art. While the liquid crystal compound of the light modulation layer maintains the horizontal orientation, oblique orientation, vertical orientation or spray orientation state in the initial state, it can be changed to the other orientation states according to an external signal.

In one example, the initial orientation of the liquid crystal compound in the light modulation layer may be vertical orientation or an orientation state similar to the vertical orientation. This orientation state is obtained by applying a vertical alignment film as the liquid crystal alignment film. This orientation is useful in an element that implements a so-called R-TN (reversed twisted nematic) orientation.

The in-plane phase difference (based on a wavelength of 550 nm) of the light modulation layer in the vertical orientation or an orientation state similar to the vertical orientation may be, for example, about 30 nm or less, 25 nm or less, 20 nm or less, 15 nm or less, 10 nm or less, or 5 nm or less, or may be 0 nm or more, or more than 0 nm.

The in-plane phase difference may be obtained according to Equation 1 above.

The light modulation film layer may further comprise a spacer for maintaining an interval between the first and second substrates. As the spacer, a ball spacer, a column spacer or a partition wall spacer, which is a spacer that is commonly applied, may be applied. In a suitable example, the partition wall spacer may be used as the spacer, and in particular, the partition wall spacer in which the partition walls form at least one closed figure may be applied. As the closed figure formed by the partition wall spacer, a hexagon (e.g., a regular hexagon) or a quadrangle (e.g., a square or a rectangle) may be exemplified. The partition wall spacer in which the closed figure is a hexagon, particularly a regular hexagon, is also called a so-called honeycomb type spacer. Such a honeycomb or quadrangular partition wall spacer means a case where the figure formed by the partition wall spacer is a honeycomb or quadrangle when the form of the partition wall spacer formed on a substrate is observed in the normal direction of the substrate, as is known. The honeycomb type may usually include a combination of a regular hexagon, and the quadrangle may include a square, a rectangle or a combination of a square and a rectangle, and the like. A partition wall spacer may be used as the spacer in consideration of attachment force between the first and second substrates, without being limited thereto.

The pitch of the spacer may also be appropriately selected in consideration of the desired adhesion or cell gap maintaining efficiency, and the like. For example, when the partition spacer is applied, the pitch of the partition spacer may be in a range of 50µm to 2,000µm. The method of obtaining the pitch in the partition spacer is known. For example, if the partition spacer is a honeycomb type, the pitch is obtained through the interval of opposite sides in the hexagon forming the honeycomb, and in the case of a tetragon, the pitch is obtained through the length of the sides of the tetragon. In the case where the intervals of the sides facing each other in the hexagon forming the honeycomb or the lengths of the sides of the tetragon are not constant, an average value of them may be defined as the pitch.

When the partition wall spacer constitutes a closed figure, for example, the area of the closed figure (i.e., the area of, for example, the hexagon or the quadrangle) may be, for example, in a range of about 1 to 200 mm2. When a plurality of closed figures is formed by the partition wall spacers and the closed figures have different areas, the area is an arithmetic mean value.

The line width of the partition spacer, for example, the width of each wall of the hexagon forming the honeycomb, or the tetragon, may be in a range of, for example, about 5µm to 50µm. In another example, the line width may be about 10 µm or more, or 15 µm or more, or may also be 45 µm or less, 40 µm or less, 35 µm or less, 30 µm or less, 25 µm or less, or 20 µm or less or so.

In the above range, the cell gap may be properly maintained, and adhesion between substrates may also be maintained excellently.

A method of forming the ball spacer, column spacer or partition spacer as above between substrates is known.

As a component for applying an external signal to the light modulation layer, an electrode layer may be formed on each substrate of the light modulation film layer. For example, the electrode layer may be present between the first surface and the pressure-sensitive adhesive or adhesive layer in the first substrate (between 100 and 1001 in Figure 2) and/or between the first surface and the alignment film in the second substrate (between 200 and 2001 in Figure 2) (if a spacer is present, between the spacer and the alignment film). In the case of the second substrate, it is common that first, an electrode layer is formed on the first surface, and a spacer and an alignment film are formed thereon sequentially, so that when a spacer is present, the electrode layer may be located between the first surface of the second substrate and the spacer and alignment film.

As the electrode layer, a known transparent electrode layer may be applied, and for example, a so-called conductive polymer layer, a conductive metal layer, a conductive nanowire layer, or a metal oxide layer such as ITO (indium tin oxide) may be used as the electrode layer. Besides, various materials and forming methods capable of forming a transparent electrode layer are known, which can be applied without limitation.

The light modulating device may comprise other additional constitutions as necessary, while basically comprising the light modulation film layer. That is, depending on the driving mode, the implementation of the above-described transparent, black, high reflection and/or low reflection mode and switching between them are possible even with the light modulation film layer alone, but in order to facilitate the implementation or switching of these modes, it is also possible to include additional components.

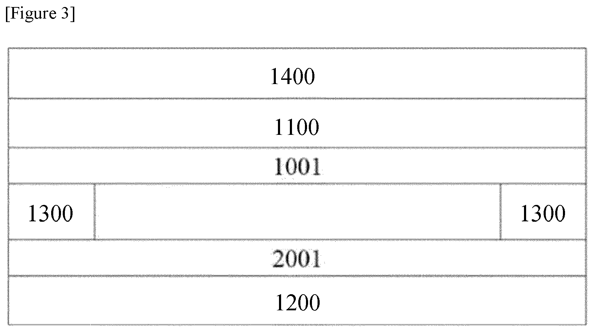

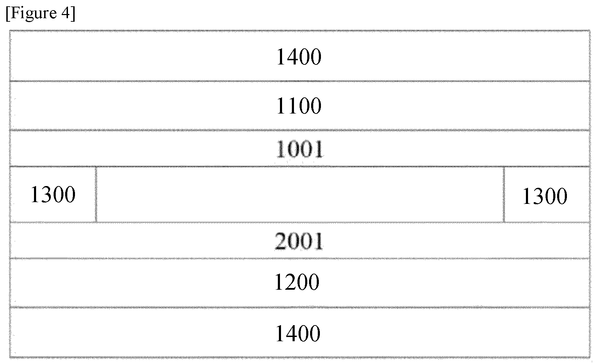

For example, the device may further comprise a polarization layer (passive polarization layer) disposed on one side or both sides of the light modulation film layer. Figure 3 is, as an example of the above structure, the case where in the structure of Figure 2, the polarization layer (1400) is disposed only on one side of the light modulation film layer, and Figure 4 is the case where in the structure of Figure 2, the polarization layer (1400) is disposed on both sides of the light modulation film layer. In addition, when the partition spacer is applied as the spacer and the shape is a tetragon (square or rectangle), the sides of the tetragon and the absorption axis of the polarization layer are suitably disposed to be substantially vertical or horizontal to each other.

The term polarization layer may mean an element that converts natural light or unpolarized light into polarized light. In one example, the polarization layer may be a linear polarization layer. The linear polarization layer means a case where the selectively transmitting light is linearly polarized light that vibrates in any one direction and the selectively absorbing or reflecting light is linearly polarized light that vibrates in directions orthogonal to the vibration direction of the linearly polarized light. That is, the linear polarization layer may have a transmission axis and absorption axes or reflection axes orthogonal to each other in the plane direction.

The polarization layer may be an absorptive polarization layer or a reflective polarization layer. As the absorptive polarization layer, for example, a polarization layer in which iodine is dyed to a polymer stretched film such as a PVA stretched film, or a guest-host polarization layer in which liquid crystals polymerized in an oriented state are used as a host and dichroic dyes arranged along the orientation of the liquid crystals are used as a guest may be used, without being limited thereto.

As the reflective polarization layer, for example, a reflective polarization layer known as a so-called DBEF (dual brightness enhancement film) or a reflective polarization layer formed by coating a liquid crystal compound such as LLC (lyotropic liquid crystal) may be used, but is not limited thereto.

As shown in Figure 4, it may have a structure in which the polarization layers are disposed on both sides of the light modulation film layer. In this case, the angle formed by the transmission axes of the polarization layers disposed on both sides may be in the range of 85 degrees to 95 degrees, or approximately perpendicular.

The light modulating device may comprise other necessary constitutions in addition to the above constitutions. For example, any other constitution necessary for driving or using the light modulating device, such as a pressure-sensitive adhesive layer or adhesive layer for attaching other components in addition to the pressure-sensitive adhesive layer or adhesive layer which may be formed on the first surface of the first substrate, a hard coating film, an antireflection film and/or an NIR (near-infrared) cut layer, may be added.

A method of manufacturing the light modulating device is not particularly limited, and the device may be manufactured through a known method except that the above elements are applied as each component.

The present application also relates to an automobile comprising the light modulating device. In the automobile of the present application, such a light modulating device is included in a sunroof or glass. Here, as shown in Figure 1, the glass is the side glass (200) of the vehicle. In addition, the sunroof (400) formed only in a partial region on the ceiling of the vehicle is illustrated in Figure 1, but the form of the sunroof of the present application is not limited to that illustrated in Figure 1, and for example, also includes a design in which a significant part of the vehicle's ceiling is made up of the sunroof. Furthermore, the light modulating device of the present application may constitute the sunroof or the vehicle glass as a whole, or may form a part thereof.

In the automobile of the present application, when the light modulating device comprises an anisotropic substrate as the above-described substrate in the structure as described above, the optical axis of the substrate in the case of the sunroof may be parallel to the width direction (that is, the dotted line direction exemplarily indicated in Figure 1) of the automobile. In addition, in the case of vehicle glass, the optical axis of the substrate may be parallel to the ground direction (that is, as indicated by the dotted line in Figure 1, the direction that the automobile is parallel to the ground in a state where its four wheels are in contact with the ground, or the longitudinal direction of the automobile) of the substrate.

According to such a structure, the front or movement direction of the passenger's gaze is matched with the optical axis direction of the substrate of the light modulating device, or the like, whereby optical non-uniformity that may appear through the application of the anisotropic substrate can be improved or eliminated while taking advantages of the substrate.

A method of configuring such an automobile is not particularly limited, and a method of constructing a sunroof or glass of an automobile is generally adopted, but the process proceeds so that the above-described arrangement may be achieved in consideration of the optical axis direction of the light modulating device upon the construction.

Other methods of implementing the automobile of the present application are not particularly limited, and a known method may be applied.

### [Effects of Invention]

The present application can provide a light modulating device comprising an anisotropic plastic substrate and an automobile in which the light modulating device is applied to a sunroof and/or glass, and can provide an automobile capable of eliminating or improving disadvantages due to application of the anisotropic plastic substrate, while taking advantages of the light modulating device.

### [Brief Description of Drawings]

Figure 1 is a view showing an external appearance of an exemplary automobile.
Figure 2 to 4 are schematic diagrams of exemplary light modulating devices of the present application.
Figures 5 to 16 are photographs showing results of evaluating uniformity of optical properties assuming that a light modulating device is applied to a sunroof or glass of a vehicle.

### [Mode for Invention]

Hereinafter, the present application will be described in detail through Examples, but the scope of the present application is not limited by Examples below.

### Preparation Example 1. Manufacturing of light modulating device (A)

As first and second substrates, a polyester film (SKC, highly stretched PET, in-plane phase difference (based on a wavelength of 550 nm): about 10,000 nm) with a thickness of about 145 µm or so, in which an ITO (indium tin oxide) layer was deposited on each first surface to a thickness, was used. A horizontal photo-alignment film (AMP21, LG Chem, norbornene series) was formed on each surface of the ITO layers of the first and second substrates. At this time, when the alignment film was formed on the surface of the ITO layer of the second substrate, ball spacers having an average diameter (D50 diameter) of about 12 µm were dispersed in the alignment film material, so that the thickness (cell gap) of the liquid crystal layer in the final product was maintained by the ball spacers. The orientation of the photo-alignment film was performed by irradiation of linearly polarized ultraviolet rays, and the orientation of the liquid crystal compound by the photo-alignment film was performed to be approximately horizontal with the slow axis of the substrate. Subsequently, a liquid crystal composition (MDA-14-1235, manufactured by Merck) comprising a dichroic dye was coated on the alignment film of the second substrate, and a light modulation film layer was manufactured by laminating the surface of the first substrate, on which the alignment film was formed, with the coated side of the liquid crystal composition so as to face each other. Subsequently, an absorptive linear polarization layer of PVA (poly(vinyl alcohol)) series was attached to one side of the light modulation film layer to manufacture a light modulating device. At the time of the attachment, the absorption axis of the linear polarization layer and the slow axis of the substrate were made to be horizontal to each other.

### Example 1 and Comparative Example 1

The non-uniformity of light transmittance was evaluated by applying the light modulating device (A) of Preparation Example 1 to a sunroof of an automobile.

A surface light source was disposed on the rear surface of the light modulating device, the light modulating device was mounted at a sunroof position of the vehicle so that the slow axis of the substrate in the device was parallel to the width of the vehicle, and then the non-uniformity in the case of moving the gaze to the left and right while observing from the front was evaluated (Test 1).

A surface light source was disposed on the rear surface of the light modulating device, the light modulating device was mounted at a sunroof position of the vehicle so that the slow axis of the substrate in the device was perpendicular to the width of the vehicle, and then the non-uniformity in the case of moving the gaze to the left and right while observing from the front was evaluated (Test 2).

Test 1 above corresponds to Example 1, and Test 2 corresponds to Comparative Example 1.

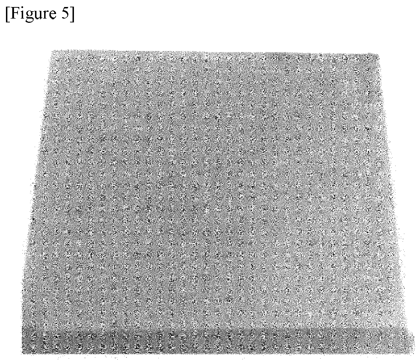

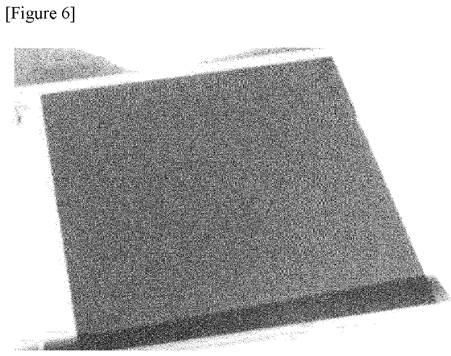

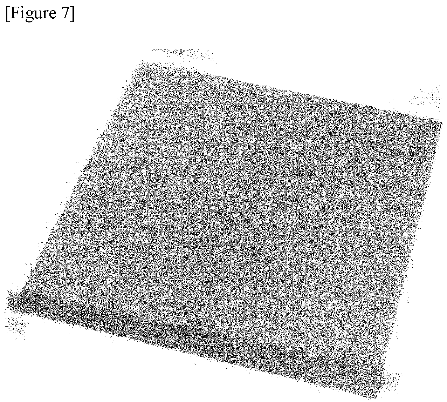

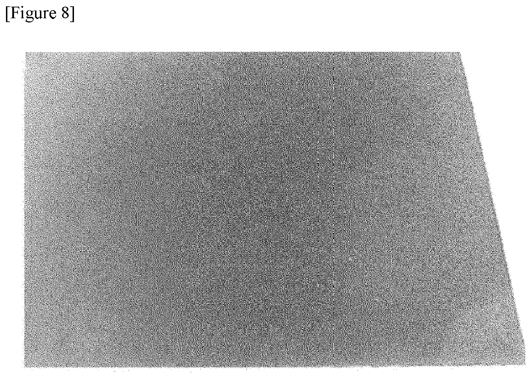

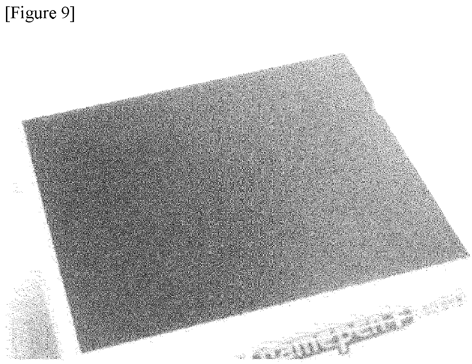

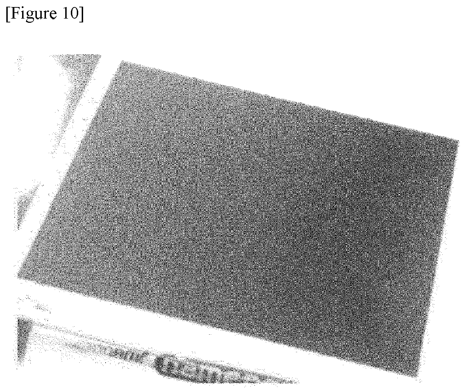

Figures 5 to 7 are cases of observing the front, left and right, respectively, in Test 1 above, and Figures 8 to 10 are cases of observing the front, left and right, respectively, in Test 2 above.

As in the figures, in the case of Test 1, the uniform transmittance was maintained as in the case of frontal observation even when the observer's gaze moved, but in the case of Test 2, the transmittance deviation for each region occurred according to the movement of the observer's gaze, so that the optical uniformity was not ensured.

### Preparation Example 2. Manufacturing of light modulating device (B)

As a first substrate, a polyester film (SKC, highly stretched PET, in-plane phase difference (based on a wavelength of 550 nm): about 10,000 nm) having a thickness of about 145 µm or so, in which an ITO (indium tin oxide) layer was deposited on the first surface to a thickness, was used. A pressure-sensitive adhesive layer was formed on the first surface of the first substrate. A silicone pressure-sensitive adhesive composition (Shinetsu, KR3700) was barcoated and dried at about 150°C or so for 5 minutes to form the pressure-sensitive adhesive layer to a thickness of 10 µm or so. As a second substrate, the same substrate as the first substrate was applied. First, as honeycomb type partition wall spacers, partition wall spacers in which the regular hexagon (closed figure) constituting the honeycomb had a pitch of about 350 µm or so, a height (cell gap) of about 6 µm or so and a line width of about 10 µm or so were formed on the ITO layer of the second substrate with an area ratio of about 9%, and a vertical alignment film (5661LB3, Nissan) was formed on the formed spacers. The vertical alignment film was formed by rubbing it in one direction. Subsequently, a liquid crystal composition was coated on the surface of the vertical alignment film of the second substrate, and a light modulation film layer was manufactured by laminating the pressure-sensitive adhesive layer of the first substrate with the coated side of the liquid crystal composition so as to face each other. As the liquid crystal composition, a composition formulated by mixing a liquid crystal compound (MAT-19-1261, manufactured by Merck) with a chiral dopant (S811, manufactured by Merck) to implement a pitch of approximately 20 µm or so, was used. Subsequently, two absorptive linear polarization layers of PVA (poly(vinyl alcohol)) series were attached to both sides of the light modulation film layer to manufacture a light modulating device. At the time of the attachment, the absorption axis of the linear polarization layer and the slow axis of the substrate were made to be perpendicular or horizontal to each other, and the absorption axes between the two polarization layers were made to be perpendicular to each other.

### Example 2 and Comparative Example 2

The non-uniformity of light transmittance was evaluated by applying the light modulating device (A) of Preparation Example 2 to a sunroof of an automobile.

A surface light source was disposed on the rear surface of the light modulating device, the light modulating device was mounted at a sunroof position of the vehicle so that the slow axis of the substrate in the device was parallel to the width of the vehicle, and then the non-uniformity in the case of moving the gaze to the left and right while observing from the front was evaluated (Test 3).

A surface light source was disposed on the rear surface of the light modulating device, the light modulating device was mounted at a sunroof position of the vehicle so that the slow axis of the substrate in the device was perpendicular to the width of the vehicle, and then the non-uniformity in the case of moving the gaze to the left and right while observing from the front was evaluated (Test 4).

Test 3 above corresponds to Example 2, and Test 4 corresponds to Comparative Example 2.

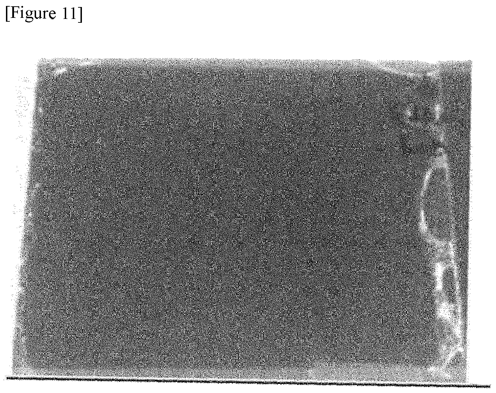

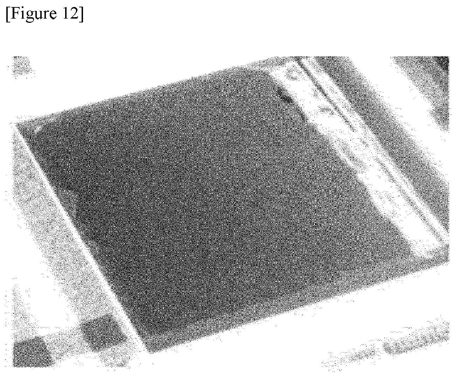

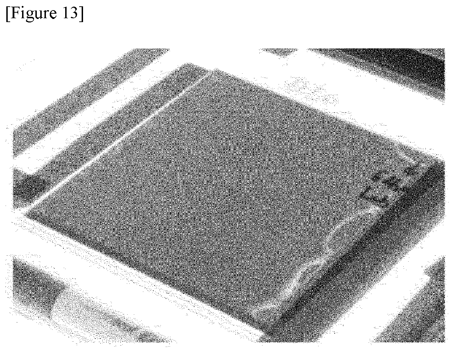

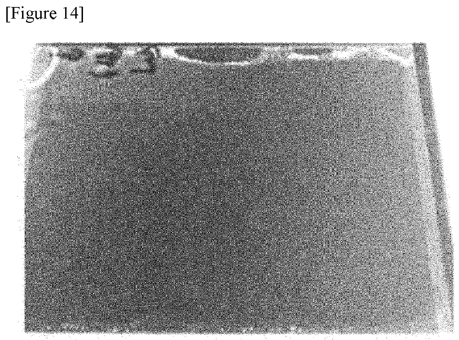

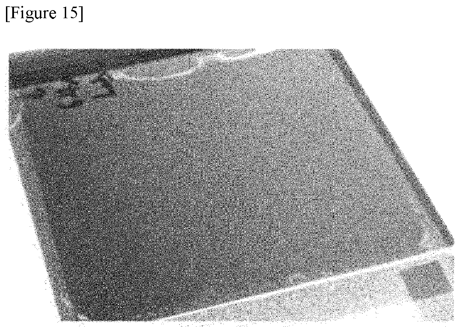

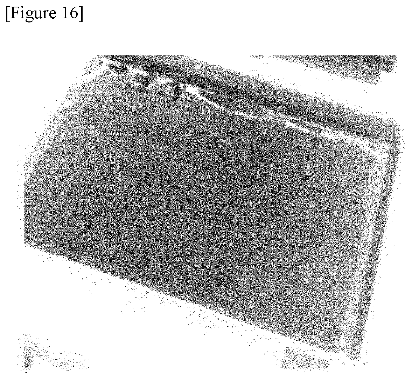

Figures 11 to 13 are cases of observing the front, left and right, respectively, in Test 3 above, and Figures 14 to 16 are cases of observing the front, left and right, respectively, in Test 4 above.

As in the figures, in the case of Test 3, the uniform transmittance was maintained as in the case of frontal observation even when the observer's gaze moved, but in the case of Test 4, the transmittance deviation for each region occurred according to the movement of the observer's gaze, so that the optical uniformity was not ensured.

## Claims

1. A light modulating device configured to be comprised in a sunroof (400) of an automobile, comprising:
a light modulation film layer,
wherein the light modulation film layer comprises:
first and second anisotropic substrates (1100, 1200); and
a liquid crystal layer,
wherein each of the first and second anisotropic substrates (1100, 1200) has a first surface,
wherein the first and second anisotropic substrates (1100, 1200) are positioned such that their first surfaces face each other;
wherein the liquid crystal layer is between the first surfaces of the first and second anisotropic substrates (1100, 1200), **characterized in that** a slow axis of the first or second anisotropic substrate (1100, 1200) is formed to be disposed parallel to the width direction of the automobile.

2. A light modulating device, comprising:
a light modulation film layer,
wherein the light modulation film layer comprises:
first and second anisotropic substrates (1100, 1200); and
a liquid crystal layer,
wherein each of the first and second anisotropic substrates (1100, 1200) has a first surface,
wherein the first and second anisotropic substrates (1100, 1200) are positioned such that their first surfaces face each other;
wherein the liquid crystal layer is between the first surfaces of the first and second anisotropic substrates (1100, 1200), **characterized in that**
the light modulating device is configured to be comprised in the side glass (200) of an automobile, and
a slow axis of the first or second anisotropic substrate (1100, 1200) is formed to be disposed parallel to the longitudinal direction of the automobile.

3. The light modulating device according to claim 1, wherein the light modulating device has a fastening mean or portion by which the light modulating device is installed to the sunroof (400) of the automobile, or the light modulating device has the same shape as the sunroof (400), and
wherein the fastening mean or portion, or the shape is formed such that the slow axis of the first or second anisotropic substrate (1100, 1200) is disposed parallel to the width direction of the automobile when the light modulating device is installed to the sunroof (400) of the automobile by the fastening means or portion or according to the shape.

4. The light modulating device according to claim 2, wherein the light modulating device has a fastening mean or portion by which the light modulating device is installed to the side glass (200) of the automobile, or the light modulating device has the same shape as the side glass (200), and
wherein the fastening mean or portion, or the shape is formed such that the slow axis of the first or second anisotropic substrate (1100, 1200) is disposed parallel to the longitudinal direction of the automobile when the light modulating device is installed as the side glass (200) of the automobile by the fastening means or portion or according to the shape.

5. The light modulating device according to claim 1, wherein the slow axes of the first and second anisotropic substrates (1100, 1200) are parallel to each other.

6. The light modulating device according to claim 1, wherein the first and second anisotropic substrates (1100, 1200) each have an in-plane phase difference of 400 nm or more.

7. The light modulating device according to claim 1, wherein a liquid crystal alignment film (2001) is present on each of the first surface of the first anisotropic substrate (1100) and the first surface of the second anisotropic substrate (1200).

8. The light modulating device according to claim 1, wherein a pressure-sensitive adhesive layer or an adhesive layer (1001) is present on the first surface of the first anisotropic substrate (1100), and a liquid crystal alignment film (2001) is present on the first surface of the second anisotropic substrate (1200).

9. The light modulating device according to claim 1, further comprising a polarization layer (1400) disposed only on one side of the light modulation film layer, wherein the liquid crystal layer comprises a liquid crystal compound and a dichroic dye, and wherein the absorption axis of the polarization layer (1400) and the slow axis of the first or second anisotropic substrate (1100, 1200) are perpendicular or horizontal to each other.

10. The light modulating device according to claim 1, further comprising a polarization layer (1400) disposed on both sides of the light modulation film layer, wherein the liquid crystal layer comprises a liquid crystal compound and a chiral dopant, and wherein the absorption axis of the polarization layer (1400) and the slow axis of the first or second anisotropic substrate (1100, 1200) are perpendicular or horizontal to each other.

11. The light modulating device according to claim 2, wherein the slow axes of the first and second anisotropic substrates (1100, 1200) are parallel to each other.

12. The light modulating device according to claim 2, wherein the first and second anisotropic substrates (1100, 1200) each have an in-plane phase difference of 400 nm or more.

13. An automobile, comprising:
a light modulating device according to claim 1 in a sunroof (400).

14. An automobile, **characterized in** comprising:
a light modulating device according to claim 2 in the side glass (200).

## Patentansprüche

1. Lichtmodulierende Vorrichtung, die konfiguriert ist, um in einem Schiebedach (400) eines Kraftfahrzeugs enthalten zu sein, umfassend:
eine Lichtmodulationsfilmschicht,
wobei die Lichtmodulationsfilmschicht umfasst:
erste und zweite anisotrope Substrate (1100, 1200); und
eine Flüssigkristallschicht,
wobei jedes der ersten und zweiten anisotropen Substrate (1100, 1200) eine erste Oberfläche aufweist,
wobei die ersten und zweiten anisotropen Substrate (1100, 1200) so positioniert sind, dass ihre ersten Oberflächen einander zugewandt sind;
wobei sich die Flüssigkristallschicht zwischen den ersten Oberflächen der ersten und zweiten anisotropen Substrate (1100, 1200) befindet, **dadurch gekennzeichnet, dass** eine langsame Achse des ersten oder zweiten anisotropen Substrats (1100, 1200) so ausgebildet ist, dass sie parallel zur Breitenrichtung des Automobils angeordnet ist.

2. Lichtmodulierende Vorrichtung, umfassend:
eine Lichtmodulationsfilmschicht,
wobei die Lichtmodulationsfilmschicht umfasst:
erste und zweite anisotrope Substrate (1100, 1200); und
eine Flüssigkristallschicht,
wobei jedes der ersten und zweiten anisotropen Substrate (1100, 1200) eine erste Oberfläche aufweist,
wobei die ersten und zweiten anisotropen Substrate (1100, 1200) so positioniert sind, dass ihre ersten Oberflächen einander zugewandt sind;
wobei sich die Flüssigkristallschicht zwischen den ersten Oberflächen der ersten und zweiten anisotropen Substrate (1100, 1200) befindet,
die lichtmodulierende Vorrichtung konfiguriert ist, um in dem Seitenglas (200) eines Kraftfahrzeugs enthalten zu sein, und
eine langsame Achse des ersten oder zweiten anisotropen Substrats (1100, 1200) so ausgebildet ist, dass sie parallel zur Längsrichtung des Automobils angeordnet ist.

3. Lichtmodulierende Vorrichtung nach Anspruch 1, wobei die lichtmodulierende Vorrichtung ein Befestigungsmittel oder einen Abschnitt aufweist, durch das/den die lichtmodulierende Vorrichtung an dem Schiebedach (400) des Kraftfahrzeugs installiert ist, oder die lichtmodulierende Vorrichtung die gleiche Form wie das Schiebedach (400) aufweist, und
wobei das Befestigungsmittel oder der Abschnitt oder die Form so ausgebildet ist, dass die langsame Achse des ersten oder zweiten anisotropen Substrats (1100, 1200) parallel zur Breitenrichtung des Automobils angeordnet ist, wenn die lichtmodulierende Vorrichtung an dem Schiebedach (400) des Kraftfahrzeugs durch das Befestigungsmittel oder den Abschnitt oder gemäß der Form installiert ist.

4. Lichtmodulierende Vorrichtung nach Anspruch 2, wobei die lichtmodulierende Vorrichtung ein Befestigungsmittel oder einen Abschnitt aufweist, durch das/den die lichtmodulierende Vorrichtung an dem Seitenglas (200) des Kraftfahrzeugs installiert ist, oder die lichtmodulierende Vorrichtung die gleiche Form wie das Seitenglas (200) aufweist, und
wobei das Befestigungsmittel oder der Abschnitt oder die Form so ausgebildet ist, dass die langsame Achse des ersten oder zweiten anisotropen Substrats (1100, 1200) parallel zur Längsrichtung des Automobils angeordnet ist, wenn die lichtmodulierende Vorrichtung als das Seitenglas (200) des Kraftfahrzeugs durch das Befestigungsmittel oder den Abschnitt oder gemäß der Form installiert ist.

5. Lichtmodulierende Vorrichtung nach Anspruch 1, wobei die langsamen Achsen des ersten und zweiten anisotropen Substrats (1100, 1200) parallel zueinander sind.

6. Lichtmodulierende Vorrichtung nach Anspruch 1, wobei das erste und zweite anisotrope Substrat (1100, 1200) jeweils eine Phasendifferenz in der Ebene von 400 nm oder mehr aufweisen.

7. Lichtmodulierende Vorrichtung nach Anspruch 1, wobei ein Flüssigkristallausrichtungsfilm (2001) auf jeder der ersten Oberfläche des ersten anisotropen Substrats (1100) und der ersten Oberfläche des zweiten anisotropen Substrats (1200) vorhanden ist.

8. Lichtmodulierende Vorrichtung nach Anspruch 1, wobei eine druckempfindliche Klebeschicht oder eine Klebeschicht (1001) auf der ersten Oberfläche des ersten anisotropen Substrats (1100) vorhanden ist und ein Flüssigkristallausrichtungsfilm (2001) auf der ersten Oberfläche des zweiten anisotropen Substrats (1200) vorhanden ist.

9. Lichtmodulierende Vorrichtung nach Anspruch 1, ferner umfassend eine Polarisationsschicht (1400), die nur auf einer Seite der Lichtmodulationsfilmschicht angeordnet ist, wobei die Flüssigkristallschicht eine Flüssigkristallverbindung und einen dichroitischen Farbstoff umfasst, und wobei die Absorptionsachse der Polarisationsschicht (1400) und die langsame Achse des ersten oder zweiten anisotropen Substrats (1100, 1200) senkrecht oder horizontal zueinander sind.

10. Lichtmodulierende Vorrichtung nach Anspruch 1, ferner umfassend eine Polarisationsschicht (1400), die auf beiden Seiten der Lichtmodulationsfilmschicht angeordnet ist, wobei die Flüssigkristallschicht eine Flüssigkristallverbindung und einen chiralen Dotierstoff umfasst, und wobei die Absorptionsachse der Polarisationsschicht (1400) und die langsame Achse des ersten oder zweiten anisotropen Substrats (1100, 1200) senkrecht oder horizontal zueinander sind.

11. Lichtmodulierende Vorrichtung nach Anspruch 2, wobei die langsamen Achsen des ersten und zweiten anisotropen Substrats (1100, 1200) parallel zueinander sind.

12. Lichtmodulierende Vorrichtung nach Anspruch 2, wobei das erste und zweite anisotrope Substrat (1100, 1200) jeweils eine Phasendifferenz in der Ebene von 400 nm oder mehr aufweisen.

13. Kraftfahrzeug, umfassend:
eine lichtmodulierende Vorrichtung nach Anspruch 1 in einem Schiebedach (400).

14. Kraftfahrzeug, **dadurch gekennzeichnet, dass** es umfasst:
eine lichtmodulierende Vorrichtung nach Anspruch 2 in dem Seitenglas (200).

## Revendications

1. Dispositif modulateur de lumière configuré pour être compris dans le toit ouvrant (400) d'une automobile, comprenant :
une couche mince modulatrice de lumière,
où la couche mince modulatrice de lumière comprend :
un premier et un second substrats anisotropes (1100, 1200) ; et
une couche de cristal liquide,
où chacun des premier et second substrats anisotropes (1100, 1200) présente une première surface,
où les premier et second substrats anisotropes (1100, 1200) sont positionnés de sorte que leurs premières surfaces se font face,
où la couche de cristal liquide est située entre les premières surfaces des premier et second substrats anisotropes (1100, 1200),
**caractérisé en ce qu'**un axe lent du premier ou du second substrat anisotrope (1100, 1200) est formé de sorte à être disposé en parallèle à la direction de la largeur de l'automobile.

2. Dispositif modulateur de lumière comprenant :
une couche mince modulatrice de lumière,
où la couche mince modulatrice de lumière comprend :
un premier et un second substrats anisotropes (1100, 1200) ; et
une couche de cristal liquide,
où chacun des premier et second substrats anisotropes (1100, 1200) présente une première surface,
où les premier et second substrats anisotropes (1100, 1200) sont positionnés de sorte que leurs premières surfaces se font face,
où la couche de cristal liquide est située entre les premières surfaces des premier et second substrats anisotropes (1100, 1200), **caractérisé en ce que**
le dispositif modulateur de lumière est configuré pour être compris dans une vitre latérale (200) d'une automobile et
un axe lent du premier ou du second substrat anisotrope (1100, 1200) est formé de sorte à être disposé en parallèle à la direction longitudinale de l'automobile.

3. Dispositif modulateur de lumière selon la revendication 1, où le dispositif modulateur de lumière présente un moyen ou une partie de fixation par lequel le dispositif modulateur de lumière est installé sur le toit ouvrant (400) de l'automobile, ou le dispositif modulateur de lumière a la même configuration que le toit ouvrant (400) et
où le moyen ou la partie de fixation ou la configuration est formé de sorte que l'axe lent du premier ou du second substrat anisotrope (1100, 1200) est disposé en parallèle à la direction de la largeur de l'automobile quand le dispositif modulateur de lumière est installé sur le toit ouvrant (400) de l'automobile par le biais du moyen ou de la partie de fixation ou conformément à la configuration.

4. Dispositif modulateur de lumière selon la revendication 2, où le dispositif modulateur de lumière présente un moyen ou une partie de fixation par lequel le dispositif modulateur de lumière est installé sur une vitre latérale (200) de l'automobile, ou le dispositif modulateur de lumière a la même configuration que la vitre latérale (200) et
où le moyen ou la partie de fixation ou la configuration est formé de sorte que l'axe lent du premier ou du second substrat anisotrope (1100, 1200) est disposé en parallèle à la direction longitudinale de l'automobile quand le dispositif modulateur de lumière est installé sur la vitre latérale (200) de l'automobile par le biais du moyen ou de la partie de fixation ou conformément à la configuration.

5. Dispositif modulateur de lumière selon la revendication 1, où les axes lents des premier et second substrats anisotropes (1100, 1200) sont parallèles l'un à l'autre.

6. Dispositif modulateur de lumière selon la revendication 1, où les premier et second substrats anisotropes (1100, 1200) ont chacun une différence de phase dans le plan égale ou supérieure à 400 nm.

7. Dispositif modulateur de lumière selon la revendication 1, où un film d'alignement du cristal liquide (2001) est présent sur chacune de la première surface du premier substrat anisotrope (1100) et de la première surface du second substrat anisotrope (1200).

8. Dispositif modulateur de lumière selon la revendication 1, où une couche adhésive sensible à la pression ou une couche adhésive (1001) est présente sur la première surface du premier substrat anisotrope (1100) et où un film d'alignement du cristal liquide (2001) est présent sur la première surface du second substrat anisotrope (1200).

9. Dispositif modulateur de lumière selon la revendication 1 comprenant en outre une couche de polarisation (1400) disposée sur une face seulement de la couche mince modulatrice de lumière, où la couche de cristal liquide comprend un composé cristal liquide et un colorant dichroïque et où l'axe d'absorption de la couche de polarisation (1400) et l'axe lent du premier ou du second substrat anisotrope (1100, 1200) sont perpendiculaires ou horizontaux l'un à l'autre.

10. Dispositif modulateur de lumière selon la revendication 1 comprenant en outre une couche de polarisation (1400) disposée sur les deux faces de la couche mince modulatrice de lumière, où la couche de cristal liquide comprend un composé cristal liquide et un dopant chiral et où l'axe d'absorption de la couche de polarisation (1400) et l'axe lent du premier ou du second substrat anisotrope (1100, 1200) sont perpendiculaires ou horizontaux l'un à l'autre.

11. Dispositif modulateur de lumière selon la revendication 2, où les axes lents des premier et second substrats anisotropes (1100, 1200) sont parallèles l'un à l'autre.

12. Dispositif modulateur de lumière selon la revendication 2, où les premier et second substrats anisotropes (1100, 1200) ont chacun une différence de phase dans le plan égale ou supérieure à 400 nm.

13. Automobile comprenant :
un dispositif modulateur de lumière selon la revendication 1 dans un toit ouvrant (400).

14. Automobile **caractérisée en ce qu'**elle comprend :
un dispositif modulateur de lumière selon la revendication 2 dans une vitre latérale (200).
